Europäisches Patentamt

European Patent Office

Office européen des brevets

(19)

(11) Veröffentlichungsnummer: **0 140 182**
**B1**

(12) # EUROPÄISCHE PATENTSCHRIFT

(45) Veröffentlichungstag der Patentschrift:
**31.01.90**

(21) Anmeldenummer: **84111674.2**

(22) Anmeldetag: **29.09.84**

(51) Int. Cl.⁴: **H 04 N 7/18, A 63 F 9/22**

(54) **Einrichtung zur Durchführung von Telespielen, insbesondere zur Ausbildung an optischen Zielgeräten.**

(30) Priorität: **20.10.83 DE 3338069**

(43) Veröffentlichungstag der Anmeldung:
**08.05.85 Patentblatt 85/19**

(45) Bekanntmachung des Hinweises auf die Patenterteilung:
**31.01.90 Patentblatt 90/5**

(84) Benannte Vertragsstaaten:
**BE CH DE LI NL**

(56) Entgegenhaltungen:
EP-A- 0 068 937
DE-A- 2 658 501
DE-A- 3 223 734
FR-A- 2 517 980
US-A- 4 285 523

(73) Patentinhaber: **Wegmann & Co. GmbH,
August-Bode-Strasse 1, D-3500 Kassel (DE)**

(72) Erfinder: **Abels, Frank, Ellernbusch 9, D-3042 Munster
(DE)**

(74) Vertreter: **Feder, Heinz, Dr. et al, Dominikanerstrasse 37,
D-4000 Düsseldorf 11 (DE)**

**Beschreibung**

Die Erfindung betrifft eine Einrichtung zur Durchführung von Telespielen, insbesondere zur Ausbildung an optischen Zielgeräten, mit einem Fernsehwiedergabegerät, auf dessen Bildschirm gemäß einem vorgegebenen Programm von einer Steuervorrichtung stehende oder bewegliche Zielobjekte erzeugbar sind, denen das Bild einer Umwelt überlagert wird.

Bei bekannten Telespielen sind Bilder einer Umwelt entweder gar nicht vorhanden, und die Objekte des Spieles bewegen sich auf neutralem Hintergrund oder es gibt sehr einfach strukturierte Szenarien, die synthetisch erzeugt werden.

Es ist auch bekannt, bei militärisch verwendeten Ausbildungsgeräten Bilder einer Umwelt mit besseren Szenarien synthetisch zu erzeugen und auf dem Bildschirm des Fernsehwiedergabegerätes darzustellen. So wird beispielsweise bei einem aus der DE-A1-26 58501 bekannten Verfahren zur Simulation eines beweglichen Zieles sowohl das bewegliche Zielobjekt als auch eine Panoramabilddarstellung mittels eines besonderen Steuerungssystems auf dem Bildschirm eines Fernsehwiedergabegerätes dargestellt. Dabei wird ein im Modell aufgebautes Panoramabild von einer Fernsehkamera aufgenommen und über ein Bildschirmsystem zusammen mit dem Bild des Zielobjektes dem Fernsehwiedergabegerät zugeführt. Diese bekannte Einrichtung hat den Nachteil, daß der zur Erzeugung der Umweltdarstellung notwendige technische Aufwand beträchtlich ist.

In der US-A-4 285 523 ist eine Einrichtung zur Durchführung von Telespielen beschrieben, bei der an einem Fernsehgerät ein Sicht- oder Zielgerät befestigt ist, das einem auf dem Bildschirm erscheinenden Zielobjekt nachgeführt werden kann. Auch bei dieser Einrichtung können Bilder einer Umwelt nur mit hohem technischem Aufwand elektronisch auf dem Bildschirm erzeugt werden.

Das Fehlen realistischer Bilder bei Telespielen verringert einerseits die Attraktivität der Spiele und insbesondere bei der Verwendung derartiger Einrichtungen zur Ausbildung von Richtschützen an optischen Zielgeräten den Ausbildungseffekt, weil das Erlernen von Zielaufklärung und Zielbeurteilung in Bezug auf ein taktisches Gelände nicht unter realistischen Bedingungen geübt werden kann.

Die der Erfindung zugrunde liegende Aufgabe bestand darin, eine Einrichtung zur Durchführung von Telespielen der eingangs erwähnten Art so weiterzubilden, daß hochwertige Bilder einer Umwelt in fotografischer Qualität mit möglichst geringem technischen Aufwand auf dem Bildschirm des Fernsehwiedergabegerätes dargestellt werden können.

Die Lösung dieser Aufgabe erfolgt erfindungsgemäß mit den Merkmalen aus dem kennzeichnenden Teil des Patentanspruches 1.

Es hat sich überraschenderweise gezeigt, daß die Projektion von Diapositiven, insbesondere Farbdiapositiven, von außen, also von vorn, auf den Bildschirm eines Fernsehwiedergabegerätes nicht nur möglich ist, sondern Panoramabilder liefert, die in ihrer Qualität das normale Fernsehbild beträchtlich übertreffen. Dies ist darauf zurückzuführen, daß das hochwertige Diapositiv völlig korn-, punkt- und linienfrei auf der fluoreszierenden Schicht des Bildschirmes abgebildet wird. Die Kosten für diese Art der Bilderzeugung sind im Vergleich zur synthetischen Bilderzeugung außerordentlich gering. Die bekannte Technologie der Fernsehwiedergabegeräte sowie der Telespiele kann ungeändert übernommen werden.

Bei der erfindungsgemäßen Einrichtung ist die Anordnung des Projektors in Bezug auf den Bildschirm so gewählt, daß der Betrachter den Reflex der Lichtquelle des Projektors nicht wahrnehmen kann. Nach einfachen Gesetzmäßigkeiten der geometrischen Optik wird erreicht, daß die Lichtquelle des Projektors außerhalb des Gesichtsfeldwinkels des Beobachters oder eines zusätzlichen Einblickteiles angeordnet ist.

Eine besonders vorteilhafte Ausführungsform der erfindungsgemäßen Einrichtung, die vor allem zur Ausbildung von Richtschützen an optischen Zielgeräten für Kampffahrzeuge gedacht ist, wird in den Patentansprüchen 2 bis 5 beschrieben.

Diese Ausführungsform kann als kompaktes Ausbildungsgerät aufgebaut sein, das beispielsweise auch als Telespiel in den Mannschaftskantinen der Ausbildungsstätten aufgestellt werden kann, so daß die Auszubildenden außerhalb der Dienstzeit Gelegenheit haben, an dem Gerät «zu spielen». Auf diese Weise gewinnt die Einrichtung einen sehr hohen didaktischen Wert bei der Ausbildung von Richtschützen. Im folgenden werden anhand der beigefügten Zeichnungen zwei Ausführungsbeispiele für die erfindungsgemäße Einrichtung näher erläutert.

In den Zeichnungen zeigen:

Fig. 1 eine besonders einfache Ausführungsform der erfindungsgemäßen Einrichtung, die beispielsweise als Telespiel für Unterhaltungszwecke gedacht sein kann.

Fig. 2 eine als kompaktes Ausbildungsgerät aufgebaute Ausführungsform zur Ausbildung von Richtschützen.

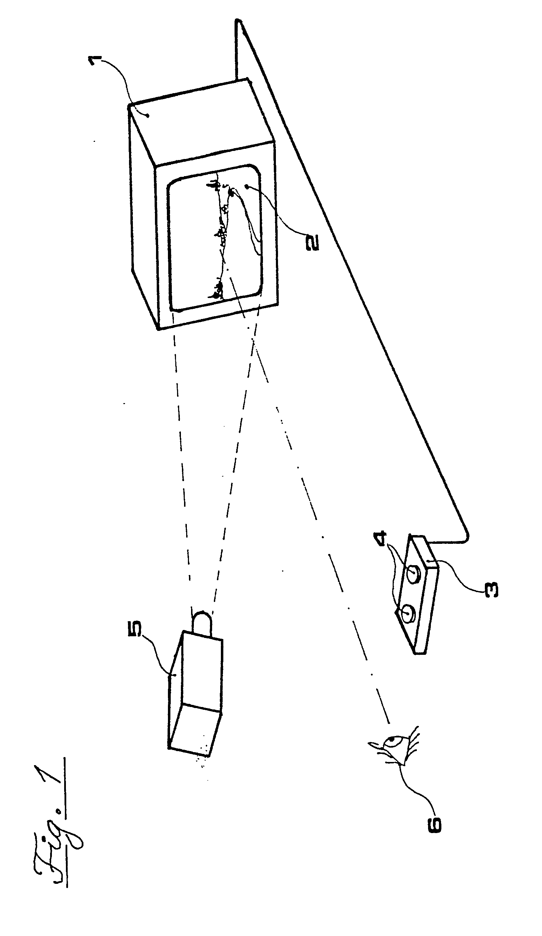

Die in Fig. 1 dargestellte Einrichtung besteht aus einem Fernsehwiedergabegerät 1 mit einem Bildschirm 2, einem Steuergerät 3 für das Telespiel mit Bedienungsknöpfen 4 sowie einem Projektor 5 für Diapositive. Der Betrachter ist durch ein Augensymbol 6 dargestellt.

Das Steuergerät 3 des Telespieles ist in gewohnter Weise an das Fernsehwiedergabegerät 1 angeschlossen. Vor dem Fernsehwiedergabegerät 1 ist oberhalb der Ebene des Betrachters 6 der Projektor 5 so angeordnet, daß die Diapositive direkt auf den Bildschirm 2 projizierbar sind. Das Fernsehwiedergabegerät 1 ist etwas nach vorne gekippt aufgestellt, so daß sowohl die Richtung vom Betrachter 6 auf den Bildschirm als auch die Projektionsrichtung des Projektors 5 gegen die Normale auf den Bildschirm 2 in der gleichen Richtung verschwenkt erscheinen, wobei der Winkel der Betrachtungsrichtung gegenüber dieser Normalen etwas kleiner ist als der Winkel der Projektionsrichtung gegenüber der Normalen. Auf diese Weise ist erreichbar, daß der Betrachter den Reflex der Projektionslampe im Projektor 5 nicht wahrnimmt.

Das Telespiel kann nun mit Hilfe des Steuergerätes 3 so programmiert sein, daß das Spielobjekt oder Zielobjekt in einer Beziehung zu dem auf den Bildschirm 2 projizierten Diapositiv steht. So kann beispielsweise ein Zielobjekt in den Konturen des Diapositives bewegt und gleichzeitig eine Zielmarke dargestellt werden, die mit Hilfe der Bedienungsknöpfe 4 auf das Ziel zu bringen ist. Der erfolgreiche Schuß wird dann in der für Telespiele üblichen Form dargestellt.

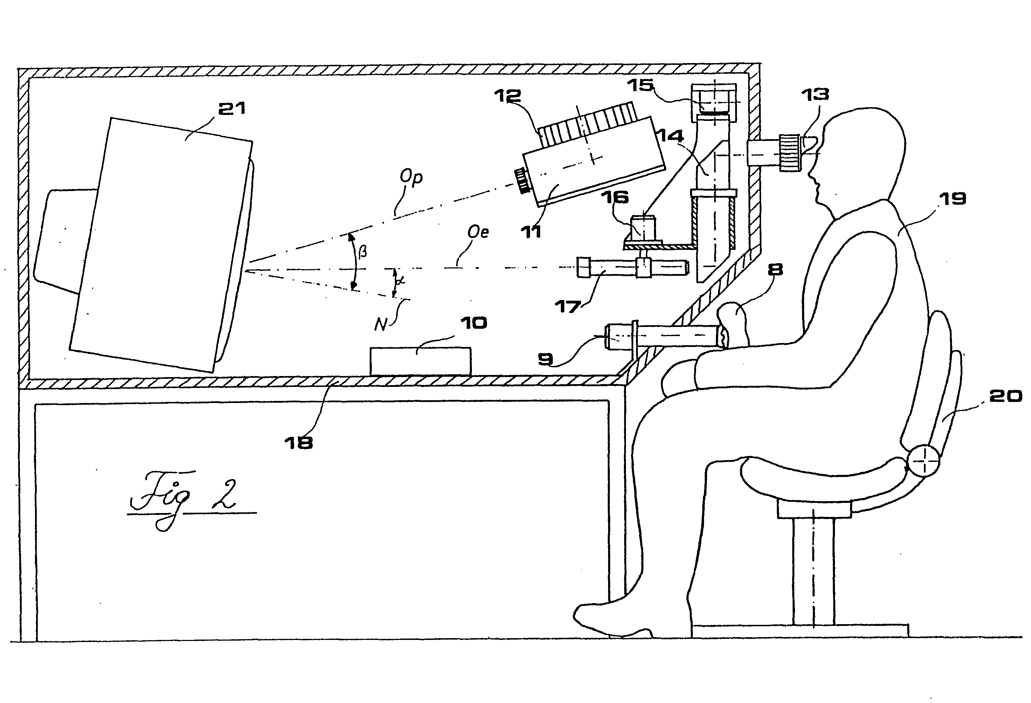

Bei dem in Fig. 2 dargestellten Ausführungsbeispiel ist die gesamte Einrichtung innerhalb eines festen Gehäuses 18 angeordnet. Es entsteht so ein Gerät, das speziell für die Ausbildung von Richtschützen an Zielgeräten in Kampffahrzeugen, beispielsweise Kampfpanzern, geeignet ist.

An einer Seitenwand des Gehäuses 18 ist ein Einblickteil angeordnet, der ein durch die Seitenwand hindurchgeführtes Okular 13 und einen sich daran anschließenden Winkelspiegel 14 aufweist. Der Winkelspiegel 14 ist mittels eines Servomotors 15 in der Höhe und der Seite verstellbar. Innerhalb des Einblickteils ist in nicht eigens dargestellter Weise eine dem Zielgerät eines Kampfpanzers entsprechende Strichplatte angeordnet, die zusammen mit dem Winkelspiegel vom Servomotor 15 bewegbar ist. Am Einblickteil ist weiterhin parallel zur Ausblickrichtung ein Treffersensor 17 angeordnet, der mittels eines weiteren Servomotors 16 seitlich verschwenkbar ist.

Gegenüber dem Einblickteil 13 bis 17 ist im Gehäuse ein Fernsehwiedergabegerät 21 angeordnet, das so nach vorne verkippt aufgestellt ist, daß die Normale N auf den Mittelpunkt des Bildschirmes 7 mit der optischen Achse Oe des Einblickteils einen vorgegebenen spitzen Winkel einschließt. Weiterhin ist im Gehäuse 18 vor dem Fernsehwiedergabegerät 21 etwa auf der Höhe des Okulars 13 ein Projektor 11 für Diapositive, die in einem Rundmagazin 12 enthalten sind, angeordnet. Der Projektor 11 ist so geneigt angeordnet, daß seine optische Achse über Op mit der Normalen N auf den Bildschirm 7 einen Winkel (β) einschließt, der größer ist als der Winkel (α) zwischen der optischen Achse Oe des Einblickteiles und der Normalen N auf den Bildschirm 7.

Innerhalb des Gehäuses 18 ist noch eine einen Rechner enthaltende Steuervorrichtung 10 angeordnet, über die sämtliche Funktionen des Telespieles gesteuert werden und von der aus insbesondere die programmierte Vorgabe unterschiedlicher Zieldarstellungen mittels des Fernsehwiedergabegerätes 21 und unterschiedlicher Umweltdarstellungen mittels des Projektors 11 durchgeführt werden.

Außen am Gehäuse ist an der Seite des Okulars 13 ein Richtgriff 8 angeordnet, der mit einem Decoder 9 innerhalb des Gehäuses verbunden ist, von dem aus der Servomotor 5 gesteuert wird.

Weiterhin können sich am Richtgriff in nicht eigens dargestellter Weise eine Anschußtaste sowie eine Taste zur Simulation einer Entfernungsmessung mittels eines Lasers befinden.

Bei der Durchführung des Telespieles bzw. der Ausbildungsübung sitzt der Auszubildende 19 auf einem Stuhl 20 vor dem Okular 13, an dem er Augenabstand und Augenschärfe wie bei einem Kampfpanzer einstellen kann. Er blickt durch das Okular 13 und den Winkelspiegel 14 auf das Fernsehwiedergabegerät 21, auf dessen Bildschirm 7 mittels des Projektors 11 eine Geländedarstellung projiziert wird. Die Steuervorrichtung 10 erzeugt auf dem Bildschirm 7 in bekannter Weise das Bild eines Zielobjektes passend zu dem gerade gezeigten Diapositiv. Der Auszubildende 19 hat nun die Aufgabe, mittels des Richtgriffes 8 die im Winkelspiegel 14 integrierte Zielmarke auf das dargestellte Ziel zu bringen und dann am Richtgriff 8 die Abfeuertaste zu betätigen. Die Bewegungen des Richtgriffes 8 werden durch den Decoder 9 in Steuersignale für den Servomotor 15 umgeformt. Der Servomotor 15 bewegt den Winkelspiegel 14 mit der integrierten Zielmarke sowie den angekoppelten Treffersensor 17 nach Höhe und Seite.

Bei Betätigung der Abfeuertaste überprüft der Treffersensor 17, ob das Ziel zum Zeitpunkt der Abfeuerung mit der Zielmarke angerichtet war. Der Treffersensor 17 arbeitet in bekannter Weise wie bei Teleschießspielen üblich. Treffersensor 17 und die Zielmarke im Winkelspiegel 14 sind im Normalfall auf der Oberfläche des Bildschirmes 7 punktjustiert. Wird ein bewegliches Ziel dargestellt, so steuert die Steuervorrichtung 10 den Treffersensor 17 mittels des Servomotors 16 zu einem sogenannten Vorhaltwert, damit nur bei Wahl des korrekten Vorhaltewertes durch den Auszubildenden 19 ein Treffer erzielt werden kann.

Im Rundmagazin 12 des Projektors 11 sind mehrere Diapositive von Geländebildern vorhanden, so daß nach einem Schuß ein neues Szenario abgerufen werden kann. Gleichzeitig wird die zu dem neuen Umweltbild gehörende Zieldarstellung im Fernsehwiedergabegerät 21 erzeugt.

Die Steuervorrichtung 10 enthält außer dem Rechner noch einen Drucker, so daß Treffer und Fehlschüsse gezählt werden können und das Ergebnis nach Abschluß des Spieles ausgedruckt werden kann.

## Patentansprüche

1. Einrichtung zur Durchführung von Telespielen, insbesondere zur Ausbildung an optischen Zielgeräten mit einem Fernsehwiedergabegerät, auf dessen Bildschirm gemäß einem vorgegebenen Programm von einer Steuervorrichtung stehende oder bewegliche Zielobjekte erzeugbar sind, denen das Bild einer Umwelt überlagert wird, dadurch gekennzeichnet, daß vor dem Bildschirm (2, 7) des Fernsehwiedergabegerätes (1, 21) ein Projektor (5, 11) für Diapositive angeordnet ist, durch den das Bild einer Umwelt auf die Vorderseite des Bildschirmes (2, 7) projizierbar ist, wobei die Lichtquelle des Projektors (5, 11) in einem solchen Abstand von der Normalen (N) auf den Mittelpunkt des Bildschirmes (2, 7) angeordnet ist, daß sie außerhalb des durch die Größe des Bildschirmes (2, 7) und seines Abstandes vom Auge des Betrachters (6) bzw. von einem Einblickteil (13 bis 17) gegebenen Gesichtsfeldes liegt und der Bildschirm (2, 7) gegen die Blickrichtung vom Auge des Betrachters (6) bzw. die optische Achse (Oe) eines Einblickteiles (13 bis 17) um eine horizontale, parallel zur Bildschirmfläche laufende Achse um einen vorgegebenen Winkel (α) derart verkippt ist, daß die Lichtquelle des Projektors (5, 11) und das Auge des Betrachters (6) bzw. das Einblickteil (13 bis 17) auf der gleichen Seite der Normalen (N) auf den Mittelpunkt des Bildschirmes (2, 7) liegen.

2. Einrichtung nach Anspruch 1, dadurch gekennzeichnet, daß in einem Gehäuse (18), an dessen einer Seitenwand das Einblickteil (13 bis 17) mit einem durch die Seitenwand geführten Okular (13) angeordnet ist, dem gegenüber ein Fernsehwiedergabegerät (21) so nach vorne gekippt aufgestellt ist, daß die Normale (N) auf den Mittelpunkt des Bildschirmes (7) mit der optischen Achse (Oe) des Einblickteiles einen vorgegebenen spitzen Winkel (α) einschließt, und innerhalb des Gehäuses (18) ein Projektor (11) für die Diapositive so gegenüber dem Fernsehwiedergabegerät (21) oberhalb der Normalen (N) auf den Mittelpunkt des Bildschirmes (7) angeordnet ist, daß seine optische Achse (Op) mit dieser Normalen (N) einen Winkel (β) einschließt, der um einen vorgegebenen Betrag größer ist als der Winkel (α) zwischen der optischen Achse (Oe) des Einblickteiles und dieser Normalen (N).

3. Einrichtung nach Anspruch 2, dadurch gekennzeichnet, daß das Einblickteil einen durch einen Servomotor (15) nach Höhe und Seite bewegbaren Winkelspiegel (14) aufweist und an der Außenseite des Gehäuses ein Richtgriff (8) angeordnet ist, der mit einem Decoder (9) innerhalb des Gehäuses zur Ansteuerung des Servomotors (5) verbunden ist.

4. Einrichtung nach Anspruch 2 oder 3, dadurch gekennzeichnet, daß am Einblickteil ein durch einen Servomotor (16) verschwenkbarer Treffersensor (7) angeordnet ist.

5. Einrichtung nach einem der Ansprüche 2 bis 4, dadurch gekennzeichnet, daß innerhalb des Gehäuses (18) eine einen Rechner enthaltende Steuervorrichtung (10) zur programmierten Vorgabe unterschiedlicher Zieldarstellungen mittels des Fernsehwiedergabegerätes (21) und unterschiedlicher Umweltdarstellungen mittels des Projektors (11) angeordnet ist.

## Claims

1. Arrangement for playing video games, in particular for training on optical aiming devices having a television receiver on whose screen stationary or moving target objects can be generated by a control device in accordance with a predetermined program, on which target objects the image of an environment is superimposed, characterized in that a slide projector (5, 11) by means of which the image of an environment can be projected onto the front side of the screen (2, 7) is arranged in front of the screen (2, 7) of the television receiver (1, 21), the light source of the projector (5, 11) being arranged at such a distance from the normal (N) to the centre of the screen (2, 7) that it is situated outside the field of view determined by the size of the screen (2, 7) and the distance of the latter from the eye of the viewer (6) or from a viewing part (13 to 17), and the screen (2, 7) being tilted about a horizontal axis running parallel to the surface of the screen, by a predetermined angle (α) relative to the sight line from the eye of the viewer (6) or the optical axis (Oe) of a viewing part (13 to 17), in such a way that the light source of the projector (5, 11) and the eye of the viewer (6) or the viewing part (13 to 17) are on the same side of the nornal (N) to the centre of the screen (2, 7).

2. Arrangement according to Claim 1, characterized in that, in a housing (18) on one side wall of which is arranged the viewing part (13 to 17) with an eyepiece (13) passed through the side wall, a television receiver (21) is set up opposite said eyepiece and is tilted forwards such that the normal (N) to the centre of the screen (7) encloses a predetermined acute angle (α) with the optical axis (Oe) of the viewing part, and, within the housing (18), a projector (11) for the slides is arranged in such a way opposite the television receiver (21), above the normal (N) to the centre of the screen (7), that its optical axis (Op) encloses with this normal (N) an angle (β) which is larger by a predetermined amount than the angle (α) between the optical axis (Oe) of the viewing part and this normal (N).

3. Arrangement according to Claim 2, characterized in that the viewing part has an angled mirror (14) movable vertically and laterally by a servomotor (15) and a joy-stick (8) which is connected to a decoder (9) within the housing for the purpose of controlling the servomotor (5) is arranged on the outside of the housing.

4. Arrangement according to Claims 2 or 3, characterized in that a hit sensor (7) swivellable by a servomotor (16) is arranged on the viewing part.

5. Arrangement according to one of Claims 2 to 4, characterized in that a control device (10), containing a computer, for the programmed selection of different target displays by means of the television receiver (21) and of different environment displays by means of the projector (11) is arranged within the housing (18).

## Revendications

1. Dispositif pour la mise en œuvre de jeux télévisés, en particulier pour la formation sur des instruments à cibles optiques, comportant un appareil récepteur de télévision sur l'écran vidéo duquel on peut produire des objets cibles immobiles ou mobiles, à l'aide d'un dispositif de commande et selon un programme prédéterminé, sur lesquels est superposée l'image d'un environnement, caractérisé par le fait que devant l'écran vidéo (2, 7) du récepteur de télévision (1, 21) est disposé un projecteur (5, 11) pour diapositives à travers lequel on peut projeter un environnement sur la face avant de l'écran vidéo (2, 27), la source lumineuse du projecteur (5, 11) étant disposée à une distance entre la normale (N) et le centre de l'écran vidéo (2, 7), telle que ladite source se trouve à l'extérieur du champ visuel constitué par la taille de l'écran vidéo (2, 7) et sa distance de l'œil de l'observateur (6), ou un élément de visée (13 à 17), et que l'écran vidéo (2, 7) est basculé par rapport à la direction de visée de l'œil de l'observateur (6) ou de l'axe optique (Oe) de l'élément de visée (13 à 17), d'un angle prédéterminé (α) autour d'un axe horizontal parallèle à la surface de l'écran vidéo, de telle sorte que la source lumineuse du projecteur (5, 11) et l'œil de l'observateur (6), ou l'élément de visée (13 à 17), se situent du même côté de la normale (N) par rapport au centre de l'écran vidéo (2, 7).

2. Dispositif selon la revendication 1, caractérisé par le fait que dans un boîtier (18), sur une paroi latérale duquel est disposé l'élément de visée (13 à 17) comportant une oculaire (13) passant à travers sa paroi latérale, boîtier face auquel est monté un récepteur de télévision (21) basculé vers l'avant de telle sorte que la normale (N) par rapport au centre de l'écran (7) forme un angle aigu (α) prédéterminé avec l'axe optique (Oe) de l'élément de visée et qu'à l'intérieur du boîtier (18) un projecteur (11) pour diapositives est disposé face au récepteur de télévision (21), au-dessus de la normale (N) par rapport au centre de l'écran vidéo (7) de telle manière que son axe optique (Op) forme un angle (β) avec cette normale (N), angle qui est supérieur dans une proportion prédéterminée à l'angle (α) entre l'axe optique (Oe) de l'élément de visée et ladite normale (N).

3. Dispositif selon la revendication 2, caractérisé par le fait que l'élément de visée présente un angle réfléchi (14) pouvant être déplacé par un servomoteur (15) en hauteur et latéralement, et que sur le côté extérieur du boîtier est disposée une poignée de réglage (8) qui est reliée, pour la commande dudit servomoteur (15), par un décodeur (9) disposé à l'intérieur du boîtier.

4. Dispositif selon la revendication 2 ou 3, caractérisé par le fait que sur l'élément de visée est disposé un capteur (7) pouvant pivoter au moyen d'un servomoteur (16).

5. Dispositif selon l'une des revendications 2 à 4, caractérisé par le fait qu'à l'intérieur du boîtier (18) est disposé un dispositif de commande (10) qui contient un ordinateur pour la préprogrammation de différentes représentations de cibles au moyen du récepteur de télévision (21) et de différentes représentations d'un environnement au moyen du projecteur (11).

Fig. 1

EP 0 140 182 B1

_Fig 2_

EP 0 140 182 B1